# EUROPÄISCHE PATENTANMELDUNG

(11) **EP 2 693 689 A1**
(43) Veröffentlichungstag der Anmeldung: **05.02.2014**
(21) Anmeldenummer: 12178579.4
(22) Anmeldetag: 31.07.2012
(51) Int. Cl.: H04L 12/24, H04L 29/08, G06K 19/06, G06K 7/14, G06K 9/22

(54) **Netzwerkkonfiguration per computerlesbaren optischen Code**

(71) Anmelder: Siemens Aktiengesellschaft, 80333 München (DE)
(72) Erfinder: Jung, Helge, 33098 Paderborn (DE); Becker, Marc, 33102 Paderborn (DE); Reimann, Christian, 59192 Bergkamen (DE); Santelmann, Holger, 33106 Paderborn-Elsen (DE)

(57) **Zusammenfassung**

Ein Verfahren zum Konfigurieren eines Netzwerkgerätes (1), das wenigstens die folgenden Schritte umfasst:
- Erfassen eines optischen Codes (3) mit einer optischen Abtasteinheit (2);
- Auslesen eines in dem optischen Code (3) gespeicherten Konfigurationsdatensatzes;
- Übertragen des ausgelesenen Konfigurationsdatensatzes in einen Einstellungsdatensatz des Netzwerkgerätes (1); und
- Betreiben des Netzwerkgerätes (1) in einem Netzwerk (5) gemäß dem Einstellungsdatensatz.

## Beschreibung

### Technisches Gebiet

Die Erfindung betrifft ein Verfahren zum Konfigurieren eines Netzwerkgerätes und ein Verfahren zum Betreiben eines Netzwerkes. Außerdem betrifft die Erfindung ein Netzwerkgerät sowie ein Computerprogrammprodukt, mit dem das Verfahren der Erfindung auf einem erfindungsgemäßen Netzwerkgerät durchgeführt werden kann.

### Technischer Hintergrund

Aufgrund der steigenden Verbreitung von tragbaren Netzwerkgeräten wie Laptops, sogenannten Smartphones, Tablet-Computern und dergleichen, die für drahtlose oder drahtgebundene Datenkommunikation über Wireless Local Area Network (WLAN) beziehungsweise Ethernet eingerichtet sind, werden auch immer mehr öffentliche Zugangspunkte oder Zugangsknoten zum Internet zur kostenfreien oder gebührenpflichtigen Benutzung angeboten. Beispielsweise bieten Betreiber von Cafés ihren Kunden häufig einen drahtlosen Netzwerkzugang an, um sie zu einem längeren Verweilen und dadurch zu einem höheren Konsum zu bewegen. Damit ein solcher Netzwerkzugang jedoch tatsächlich nur von zahlenden Kunden benutzt werden kann, wird vom Betreiber gewöhnlich eine Zugangsbeschränkung eingerichtet. Für eine solche Zugangsbeschränkung gibt es zudem auch rechtliche Gründe. Eine solche Zugangsbeschränkung kann neben bekannten Verschlüsselungstechniken insbesondere ein Passwort umfassen. Um die Zugangsbeschränkung wirksam zu halten, muss das Passwort regelmäßig geändert werden, damit eine Person, die einmalig Zugang erhalten hat, diesen nicht zeitlich unbegrenzt genießt. In der Praxis erhält daher ein Kunde oft auf einer Tageskarte oder mit seiner Bestellung einen Ausdruck der Netzwerkkonfiguration, die für einen Zugang benötigt wird. Der Kunde muss die dergestalt vorgegebenen Parameter in eine entsprechende Eingabemaske seines Netzwerkgerätes übertragen und kann das Netzwerkgerät dann wie gewünscht einsetzen.

Ähnlich stellt sich die Situation in Hotels oder Konferenzzentren dar, wo nicht selten ein drahtgebundener Netzwerkzugang zur Verfügung gestellt wird. Dem Anwender stellt sich auch hier das Problem, dass er erstens die benötigte Netzwerkkonfiguration für sein Netzwerkgerät kennen und die Netzwerkkonfiguration in seinem Netzwerkgerät entsprechend einstellen muss.

Aber auch in großen Netzwerken wie beispielsweise Firmennetzwerken kann eine Konfiguration von drahtlosen wie drahtgebundenen Netzwerkgeräten für einen Netzwerkzugang ein häufig vorgenommener und damit zeitaufwendiger Vorgang sein.

Aufgabe der Erfindung ist es daher insbesondere, verbesserte Verfahren zum Konfigurieren eines Netzwerkgerätes für einen Netzwerkzugang und Verfahren zum Betreiben eines Netzwerkes zur Verfügung zu stellen.

### Zusammenfassung der Erfindung

Die Erfindung führt daher ein Verfahren zum Konfigurieren eines Netzwerkgerätes ein, das wenigstens die folgenden Schritte umfasst:
- Erfassen eines optischen Codes mit einer optischen Abtasteinheit;
- Auslesen eines in dem optischen Code gespeicherten Konfigurationsdatensatzes;
- Übertragen des ausgelesenen Konfigurationsdatensatzes in einen Einstellungsdatensatz des Netzwerkgerätes; und
- Betreiben des Netzwerkgerätes in einem Netzwerk gemäß dem Einstellungsdatensatz.

Das Verfahren der Erfindung bietet den Vorteil, dass die Konfiguration des Netzwerkgerätes in einer besonders einfachen Weise erfolgt. Der Benutzer des Netzwerkgerätes muss die Übertragung der Zugangsdaten und sonstigen Parameter der Netzwerkkonfiguration nicht eigenhändig übertragen, was Zeit spart und zudem Übertragungsfehler vermeidet. Gerade in Fällen, wo Passwörter regelmäßig durch zufällig generierte neue Passwörter ersetzt werden, können die Passwörter komplizierte Zeichenfolgen darstellen, die kaum fehlerlos zu übertragen sind. Entsprechendes gilt für sonstige Parameter der Netzwerkkonfiguration wie beispielsweise IP-Adressen (IP, Internet Protocol). Die Erfindung ist daher besonders vorteilhaft beim Einsatz von Netzwerkgeräten mit kleinen physischen oder gar virtuellen Tastaturen (Bildschirmtastaturen), bei denen es leicht zu Tippfehlern kommen kann. Das Verfahren der Erfindung erlaubt es auch, eine große Zahl von Netzwerkgeräten in kurzer Zeit für den Netzzugang einzurichten, was beispielsweise in Firmennetzen, wo üblicherweise eine Vielzahl von Netzwerkgeräten verwaltet werden, vorteilhaft sein kann.

Der Schritt des Übertragens des ausgelesenen Konfigurationsdatensatzes in einen Einstellungsdatensatz des Netzwerkgerätes kann weitere Schritte der Umkodierung des Konfigurationsdatensatzes in ein von dem Netzwerkgerät verwendbares Format enthalten. Vorteilhafterweise wird der Konfigurationsdatensatz jedoch in einem einheitlichen feststehenden Format erstellt und in dem optischen Code kodiert, das auch von dem Netzwerkgerät für den Verbindungsaufbau unverändert verwendet werden kann.

Vorzugsweise werden die Schritte des Erfassens des optischen Codes, des Auslesens des Konfigurationsdatensatzes und des Übertragens des Konfigurationsdatensatzes in den Einstellungsdatensatz des Netzwerkgerätes auf dem Netzwerkgerät selbst ausgeführt. Auf diese Weise wird die Durchführung des Verfahrens besonders einfach möglich und kann implementiert werden, ohne eine Zusammenarbeit verschiedener Geräte koordinieren zu müssen.

Das Verfahren kann über einen zusätzlichen Schritt des Zurverfügungstellens des optischen Codes verfügen. Im Schritt des Zurverfügungstellens kann eine aktuell gültige Netzwerkkonfiguration in den optischen Code eingebettet und der resultierende optische Code, beispielsweise als Ausdruck einer computergenerierten Version des optischen Codes, zur Verfügung gestellt werden.

Der optische Code kann ein Barcode oder ein zweidimensionaler Code, vorzugsweise ein QR-Code, sein. Ein QR-Code kann mehr als 2000 Zeichen aufnehmen, so dass eine vollständige Netzwerkkonfiguration und gegebenenfalls weitere Daten in einen einzelnen QR-Code eingebettet werden können.

Der Konfigurationsdatensatz kann wenigstens einen ausgewählten Parameter von Netzwerkname, Verbindungsmethode, Verschlüsselungsmethode, Authentifizierungsmethode, Netzwerkadresse, Adresszuweisungsmethode, Nameserver oder Routing-informationen umfassen.

Ein zweiter Aspekt der Erfindung führt ein Verfahren zum Betreiben eines Netzwerkes ein. Das Verfahren umfasst wenigstens die folgenden Schritte:
- Bereitstellen eines Zugangsknotens, mit dem ein gemäß einem bestimmten Konfigurationsdatensatz konfiguriertes Netzwerkgerät kommunizieren kann;
- Bereitstellen eines optischen Codes, in dem der bestimmte Konfigurationsdatensatz computerlesbar gespeichert ist; und
- Bereitstellen eines Netzwerkzugangs über den Zugangsknoten für ein mit dem aus dem bereitgestellten optischen Code ausgelesenen Konfigurationsdatensatz konfiguriertes Netzwerkgerät.

Der zweite Aspekt der Erfindung betrifft somit ein Verfahren, mit dem Netzwerkbetreiber ihr Angebot vorteilhaft zur Verfügung stellen können, da dieses Angebot besonders einfach zugänglich gemacht werden kann, ohne die sonstigen bei der Bereitstellung eines Netzwerkzugangs zu berücksichtigenden Gesichtspunkte beispielsweise hinsichtlich der Konfiguration des Zugangs zu beeinträchtigen. Dieser Erfindungsaspekt ist insbesondere für das kommerzielle Betreiben eines Netzwerkzugangs geeignet.

Ein dritter Erfindungsaspekt stellt ein Netzwerkgerät mit einer optischen Abtasteinheit zur Verfügung, das dazu ausgebildet ist, das Verfahren des ersten Aspektes der Erfindung auszuführen. Dabei ist die optische Abtasteinheit bevorzugt eine Kamera. Derartige eingebaute Kameras sind insbesondere in tragbaren netzwerkfähigen Geräten weitverbreitet, so dass ein vorhandenes Netzwerkgerät dieser Art einfach zu einem erfindungsgemäßen Netzwerkgerät ausgestaltet werden kann.

Das Netzwerkgerät ist dabei besonders bevorzugt ein Smartphone, ein Tablet-Computer oder ein PDA (Personal Digital Assistant).

Ein weiterer Aspekt der Erfindung betrifft ein Computerprogrammprodukt mit computerlesbaren Instruktionen, die, in einen Arbeitsspeicher eines Computers geladen und von dem Computer ausgeführt, den Computer veranlassen, das Verfahren des ersten Erfindungsaspektes auszuführen. Das Computerprogrammprodukt kann insbesondere eine sogenannte "App" für ein Smartphone, einen Tablet-Computer oder PDA (Personal Digital Assistant) sein.

Die Erfindung stellt außerdem einen computerlesbaren Datenträger mit einem solchen Computerprogrammprodukt zur Verfügung.

### Kurzbeschreibung der Abbildungen

Die Erfindung wird im Nachfolgenden anhand von Abbildern von Ausführungsbeispielen näher beschrieben. Es zeigen:
Figur 1 eine Anordnung zur Durchführung der erfindungsgemäßen Verfahren;
Figur 2 ein Flussdiagramm eines Ausführungsbeispiels des Verfahrens gemäß dem ersten Erfindungsaspekt; und
Figuren 3 und 4 jeweils ein Beispiel für optischen Codes, die jeweils eine Beispielnetzwerkkonfiguration enthalten.

### Ausführliche Beschreibung der Abbildungen

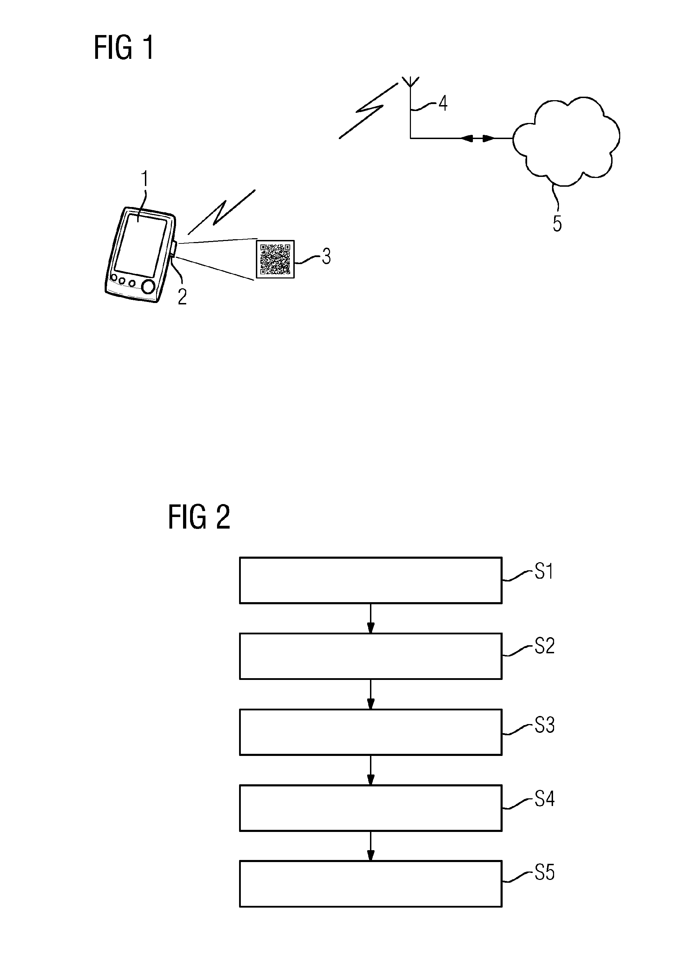

Figur 1 zeigt eine Anordnung zur Durchführung der erfindungsgemäßen Verfahren. Mit einem Netzwerkgerät 1, das beispielsweise ein Smartphone sein kann und über eine optische Abtasteinheit 2 verfügt, wird ein optischer Code 3 eingelesen. Die optische Abtasteinheit 2 ist vorzugsweise eine Kamera des Netzwerkgeräts 1, kann aber auch ein Scanner oder eine spezielle Einrichtung zum Einlesen eines optischen Codes sein. Das Netzwerkgerät 1 ist mit einer Schnittstelle für eine Datenkommunikation in einem Netzwerk ausgerüstet, beispielsweise einer Schnittstelle für eine drahtlose Datenübertragung wie WLAN. Alternativ kann auch eine drahtgebundene Datenübertragungstechnik wie beispielsweise Ethernet vorgesehen sein. Über einen sogenannten Zugangsknoten 4, der im gezeigten Beispiel als WLAN-Access Point ausgelegt ist, kann von dem Netzwerkgerät 1 nach Aufbau einer Verbindung zum Zugangsknoten 4 eine Datenkommunikation mit einem Netzwerk 5, beispielsweise dem Internet oder einem Intranet eines Anbieters des Zugangsknotens 4, aufgebaut und das Netzwerkgerät 1 somit in dem Netzwerk 5 betrieben werden.

Figur 2 zeigt ein Flussdiagramm eines Ausführungsbeispiels des Verfahrens gemäß dem ersten Erfindungsaspekt. In einem ersten Schritt S1 wird ein optischer Code zur Verfügung gestellt, in dem ein Konfigurationsdatensatz für eine Netzwerkkonfiguration gespeichert ist. In dem nachfolgenden Schritt S2 wird der optische Code erfasst, was vorzugsweise auf einem für einen Netzwerkzugang zu konfigurierenden Netzwerkgerät selbst durchgeführt wird. Das Erfassen kann beispielsweise durch Fotografieren oder Scannen des optischen Codes geschehen. So dann wird in Schritt S3 der in dem optischen Code gespeicherte Konfigurationsdatensatzes ausgelesen, was durch eine, beispielsweise durch das Netzwerkgerät selbst ausgeführte, Programmroutine geschehen kann. In Schritt S4 wird der ausgelesene Konfigurationsdatensatz in einen Einstellungsdatensatz des Netzwerkgerätes übertragen, auf den das Netzwerkgerät für den Aufbau einer den Vorgaben des Konfigurationsdatensatzes entsprechenden Netzwerkverbindung zugreifen kann. Anschließend wird in Schritt S5 das Netzwerkgerät in einem Netzwerk gemäß dem Einstellungsdatensatz betrieben. Hierfür ist gegebenenfalls eine Netzwerkverbindung durch eine physische Verbindung des Netzwerkgerätes mit dem Netzwerk herzustellen. Im Fall einer drahtlosen Netzwerkverbindung kann die Netzwerkverbindung automatisch von dem Netzwerkgerät aufgebaut werden.

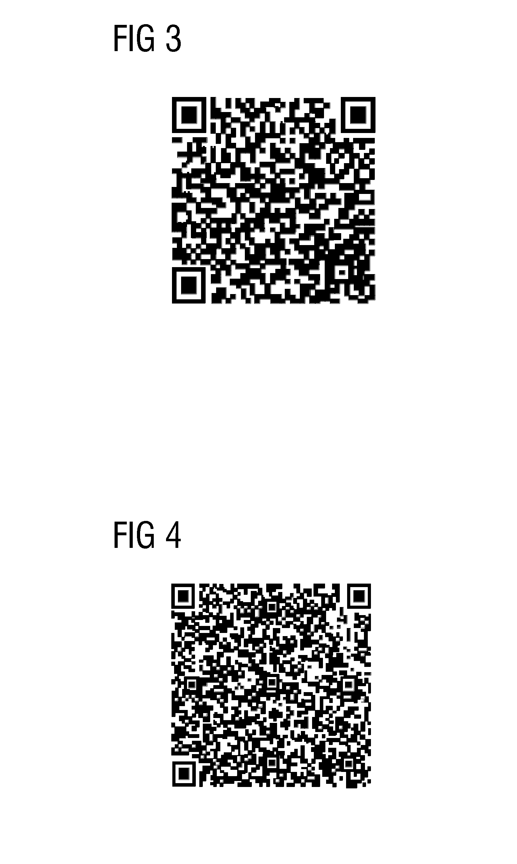

Die Figuren 3 und 4 zeigen jeweils ein Beispiel für einen optischen Code, die jeweils eine Beispielnetzwerkkonfiguration enthalten. In Figur 3 ist ein zweidimensionaler optischer Code gezeigt, der eine erste rein beispielhafte Netzwerkkonfiguration enthält. Diese lautet:
NETWORK=Internetcafe Musterstadt
CONNECT=wlan-811g-ch4:besuchernetz
ENCRYPTION=WPA2-PSK:secret
ADDRESS=dhcp

In dem Beispiel von Figur 3 bietet ein Internetcafé einen drahtlosen Netzwerkzugang gemäß dem drahtlosen WLAN-Standard IEEE 802.11 g an, wobei das Netzwerk den Bezeichner "Internetcafe Musterstadt" trägt. Ein solcher Bezeichner kann auch in einem Konfigurationsdialog oder einer Statusanzeige des Netzwerkgerätes angezeigt werden und dem Benutzer des Netzwerkgerätes die Überprüfung des Zustandekommens der gewünschten Netzwerkverbindung erleichtern. Der für den Verbindungsaufbau zu verwendende WLAN-Standard wird über den Parameter "CONNECT" mitgeteilt, der auch Informationen über das zu verwendende Frequenzband und/oder einen bestimmten Kanal enthalten kann. Im Fall eines WLANs kann auch eine SSID (Service Set Identifier) des WLANs über diesen Parameter übermittelt werden. Für den Fall einer drahtgebundenen Netzwerkverbindung kann ein entsprechendes Schlüsselwort wie beispielsweise "plug" übergeben werden. Außerdem kann optional vorgesehen sein, eine Beschreibung des Ortes der zu verwendenden Netzwerkdose über diesen Parameter zu übermitteln, die dem Benutzer von seinem Netzwerkgerät angezeigt werden kann, um ihm die Suche nach der Netzwerkdose zu erleichtern.

Mit dem Parameter "ENCRYPTION" wird der zu verwendende Verschlüsselungsstandard bestimmt, wobei mögliche Beispiele "none" für keine Verschlüsselung, "WPA" für "Wi-fi Protected Access" Verschlüsselung, "WPA2-PSK" für Verschlüsselung gemäß "Wi-fi Protected Access 2" mit "Pre-Shared Key" oder "IPsec" für "Internet Protocol Security" sein können. Dabei kann es beispielsweise vorgesehen sein, spezifische Einstellungen über ein spezielles Zeichen wie einen Doppelpunkt voneinander zu trennen. Auch könnten so oder beispielsweise durch die Verwendung einer Leerstelle alternative Verschlüsselungsmethoden, zwischen denen das Netzwerkgerät beziehungsweise dessen Benutzer auswählen kann, aufgeführt und über den "ENCRYPTION"-Parameter übermittelt werden. Dies kann dann sinnvoll sein, wenn ein Netzwerkzugang auch für Netzwerkgeräte, die nicht alle gängigen Verschlüsselungsmethoden beherrschen, zur Verfügung gestellt werden soll.

Über den Parameter "ADDRESS" wird dem Netzwerkgerät die zu verwendende Netzwerkadresse im Netzwerk übermittelt. Dies kann beispielsweise eine feste IP-Adresse, beispielsweise eine IPv4- und/oder IPv6-Adresse, sein. Alternativ kann durch ein Schlüsselwort wie "dhcp" angezeigt werden, dass eine zu verwendende Netzwerkadresse im Zuge des Verbindungsaufbaus ausgehandelt werden soll. In diesem Fall kann auch eine MAC-Adresse eines zuständigen DHCP-Servers übermittelt werden. Auch für den "ADDRESS"-Parameter können alternative Möglichkeiten durch geeignete Trennung in einer Auflistung übermittelt werden. Beispielsweise können Leerzeichen für eine priorisierte Liste von Adresskonfigurationsvorgaben oder Semikolon für gleichzeitige Konfigurationen (mehrere IPs auf einer Schnittstelle) verwendet werden.

In Figur 4 ist ein weiterer zweidimensionaler optischer Code gezeigt, der eine zweite rein beispielhafte Netzwerkkonfiguration enthält, wie sie zum Beispiel in einem Hotel für den Internetzugang über eine Netzwerkdose bereitgestellt werden könnte. Der optische Code der Figur 4 könnte dann in einem Willkommensschreiben für den Mieter des Raumes abgedruckt sein. Die Netzwerkkonfiguration des Beispiels der Figur 4 lautet:
NETWORK=LAN-Port Konferenzraum 8
CONNECT=plug:100mbit "grün umrandete Dose"
ENCRYPTION=none
AUTH=CERTIFICATE(CA:0xD7C34CDF)
ADDRESS=192.168.42.102
DNS=192.168.2.100 192.168.3.10
ROUTE=default gw 192.168.42.1
ROUTE=192.168.42.0 peer 192.168.42.3

Das zweite Beispiel zeigt eine Netzwerkkonfiguration für ein drahtgebundenes Netzwerk, wobei der Zugang vorliegend "LAN-Port Konferenzraum 8" benannt ist. Entsprechend wird im "CONNECT"-Parameter auch das Schlüsselwort "plug" übermittelt, das um eine Angabe der über den Anschluss gebotenen Übertragungsgeschwindigkeit erweitert ist ("100mbit" für einen Ethernetanschluss mit 100 MBit/s Übertragungsgeschwindigkeit). Zusätzlich wird eine Kurzbeschreibung der zu verwendenden Anschlussdose übermittelt, um dem Benutzer des Netzwerkgerätes den Anschluss zu vereinfachen. Im Beispiel wird auf eine Verschlüsselung verzichtet, was über das Schlüsselwort "none" im "ENCRYPTION"-Parameter angezeigt wird. Zur Authentifizierung im Netzwerk ist die mit dem Parameter "AUTH" übermittelte Methode anzuwenden. Dies ist hauptsächlich in Firmennetzwerken interessant, in denen sich Geräte per kryptografischem Zertifikat authentifizieren. Ist ein Zertifikat erforderlich - wie hier im zweiten Konfigurationsbeispiel - lässt sich die Schlüssel-ID des Zertifikatsausstellers mit angeben, um dem Benutzer nur solche Netzwerke anzubieten, für die er auch ein Zertifikat hat, um sich verbinden zu können. Im Beispiel wird die Authentifizierungsmethode per Zertifikat angezeigt und eine Schlüssel-ID als hexadezimale Zahl übermittelt. Als Netzwerkadresse wird im gezeigten Beispiel eine feste IPv4-Adresse gesetzt, mit dem Parameter "DNS" werden die Netzwerkadressen zweier alternativer Domain Name Server übermittelt, die im Netzwerk für die Namensauflösung zuständig sind. Es gelten hierbei dieselben Konfigurationsmöglichkeiten wie bei dem "ADDRESS"-Parameter. So kann der Domain Name Server auch per DHCP ausgehandelt werden, was über das Schlüsselwort "dhcp" angezeigt werden kann. Über den "ROUTE"-Parameter können Routing-Informationen übermittelt werden. Der "ROUTE"-Parameter kann in einem Konfigurationsdatensatz mehrfach angegeben werden. Üblicherweise wird die einzige Route, das Default-Gateway, jedoch per DHCP gesetzt.

Wird ein Parameter nicht übermittelt, kann er im Netzwerkgerät auf einen Standardvorgabewert gesetzt werden. Solche Standardvorgabewerte können "dhcp" für die Parameter "ADDRESS", "DNS" und "ROUTE" und "none" für "ENCRYPTION" und "AUTH" sein. Obwohl die Erfindung im Detail durch Ausführungsbeispiele von bevorzugten Ausführungsformen näher illustriert und beschrieben wurde, ist die Erfindung nicht durch die offenbarten Beispiele eingeschränkt. Variationen der Erfindung können vom Fachmann aus den gezeigten Ausführungsbeispielen abgeleitet werden, ohne den Schutzumfang der Erfindung, wie er in den Ansprüchen definiert wird, zu verlassen.

## Patentansprüche

1. Ein Verfahren zum Konfigurieren eines Netzwerkgerätes (1) mit den Schritten:
- Erfassen eines optischen Codes (3) mit einer optischen Abtasteinheit (2);
- Auslesen eines in dem optischen Code (3) gespeicherten Konfigurationsdatensatzes;
- Übertragen des ausgelesenen Konfigurationsdatensatzes in einen Einstellungsdatensatz des Netzwerkgerätes (1); und
- Betreiben des Netzwerkgerätes (1) in einem Netzwerk (5) gemäß dem Einstellungsdatensatz.

2. Das Verfahren von Anspruch 1,
bei dem die Schritte des Erfassens des optischen Codes (3), des Auslesens des Konfigurationsdatensatzes und des Übertragens des Konfigurationsdatensatzes in den Einstellungsdatensatz des Netzwerkgerätes (1) auf dem Netzwerkgerät (1) selbst ausgeführt werden.

3. Das Verfahren von einem der Ansprüche 1 oder 2,
mit einem zusätzlichen Schritt des Zurverfügungstellens des optischen Codes (3).

4. Das Verfahren von einem der vorhergehenden Ansprüche,
bei dem der optische Code (3) ein Barcode oder ein zweidimensionaler Code, vorzugsweise ein QR-Code, ist.

5. Das Verfahren von einem der vorhergehenden Ansprüche,
bei dem der Konfigurationsdatensatz wenigstens einen ausgewählten Parameter von Netzwerkname, Verbindungsmethode, Verschlüsselungsmethode, Authentifizierungsmethode, Netzwerkadresse, Adresszuweisungsmethode, Nameserver oder Routing-informationen umfasst.

6. Ein Verfahren zum Betreiben eines Netzwerkes (5) mit den Schritten:
- Bereitstellen eines Zugangsknotens (4), mit dem ein gemäß einem bestimmten Konfigurationsdatensatz konfiguriertes Netzwerkgerät (1) kommunizieren kann;
- Bereitstellen eines optischen Codes (3), in dem der bestimmte Konfigurationsdatensatz computerlesbar gespeichert ist; und
- Bereitstellen eines Netzwerkzugangs (5) über den Zugangsknoten (4) für ein mit dem aus dem bereitgestellten optischen Code (3) ausgelesenen Konfigurationsdatensatz konfiguriertes Netzwerkgerät (1).

7. Ein Netzwerkgerät (1) mit einer optischen Abtasteinheit (2) und dazu ausgebildet, das Verfahren von einem der Ansprüche 1 bis 5 auszuführen.

8. Das Netzwerkgerät (1) von Anspruch 7,
bei dem die optische Abtasteinheit (2) eine Kamera ist.

9. Das Netzwerkgerät (1) von einem der Ansprüche 7 oder 8, wobei das Netzwerkgerät (1) ein Smartphone, ein Tablet-Computer oder ein PDA (Personal Digital Assistant) ist.

10. Ein Computerprogrammprodukt mit computerlesbaren Instruktionen, die, in einen Arbeitsspeicher eines Computers geladen und von dem Computer ausgeführt, den Computer veranlassen, das Verfahren von einem der Ansprüche 1 bis 5 auszuführen.

11. Ein computerlesbarer Datenträger mit dem Computerprogrammprodukt von Anspruch 10.
